# EUROPÄISCHE PATENTSCHRIFT

(11) **EP 3 623 613 B1**
(45) Veröffentlichungstag und Bekanntmachung des Hinweises auf die Patenterteilung: **07.04.2021**
(21) Anmeldenummer: 19184478.6
(22) Anmeldetag: 04.07.2019
(51) Int. Cl.: F02M 25/08

(54) **BRENNKRAFTMASCHINE MIT EINEM VENTIL UND EINEM FLUIDFÜHRENDEN BAUTEIL**
COMBUSTION ENGINE COMPRISING A VALVE AND A FLUID CONDUCTING COMPONENT
MOTEUR À COMBUSTION INTERNE DOTÉ D'UNE SOUPAPE ET D'UN COMPOSANT CONDUISANT DES FLUIDES

(30) Priorität: 14.09.2018 DE 102018215648
(43) Veröffentlichungstag der Anmeldung: 18.03.2020
(73) Patentinhaber: Volkswagen AG, 38440 Wolfsburg (DE)
(72) Erfinder: Koch, Johannes, 38118 Braunschweig (DE); Baranski, Torsten, 38100 Braunschweig (DE)

(56) Entgegenhaltungen:
- EP-A1- 3 181 885
- DE-A1-102016 210 579
- DE-A1-102018 111 116
- US-A1- 2004 000 187
- US-A1- 2006 016 253

## Beschreibung

Die Erfindung betrifft eine Brennkraftmaschine mit einem Kraftstofftank, einem fluidführenden Bauteil und einer Tankentlüftungsleitung, wobei in der Tankentlüftungsleitung ein Ventil angeordnet ist. Insbesondere betrifft die Erfindung ein Kraftfahrzeug mit einer solchen Brennkraftmaschine.

Aus DE 10 2015 209 651 A1 ist eine Tankentlüftungsanlage mit einem Adsorptionsfilter bekannt, wobei eine Leitung den Adsorptionsfilter mit einem Luftzuführsystem eines Verbrennungsmotors verbindet. In der Leitung ist eine Pumpe angeordnet und stromabwärts der Pumpe ist eine Drosselstelle und parallel zur der Drosselstelle eine Bypass-Leitung angeordnet. Bei ordnungsgemäßer Montage der Leitung ist die Bypass-Leitung dicht verschlossen und bei nicht ordnungsgemäßer Montage ist die Bypass-Leitung offen. Details zum Öffnen und Verschließen der Bypass-Leitung sind dem Dokument nicht zu entnehmen. Aus DE 10 2016 210 579 A1 ist ein Verfahren zur Diagnose von Leckagen nach der Entlüftungsdurchfluss-Steuerblende bekannt. In Verbindung mit diesem Verfahren ist eine Brennkraftmaschine mit einem Kraftstofftank, einem fluidführenden Bauteil und einer den Kraftstofftank und das fluidführende Bauteil strömungsleitend verbindenden Tankentlüftungsleitung beschrieben. Bei dieser Brennkraftmaschine ist in der Tankentlüftungsleitung ein Detektions-Teilbereich des Ventils derart von dem fluidführenden Bauteil umgeben, dass um den Detektions-Teilbereich herum ein Detektionsraum gebildet ist, über welche der Detektionsraum mit Druck beaufschlagbar ist, wobei mindestens ein Drucksensor zur Überwachung des Drucks im Detektionsraum vorgesehen ist.

Andere nachveröffentlichten Lösungen sind aus EP 3 597 898 A1 und WO 2019/195564 A1 bekannt.

Der Erfindung liegt die Aufgabe zugrunde, eine Brennkraftmaschine mit einem Ventil und einem fluidführenden Bauteil zur Verfügung zu stellen, mittels welcher eine Verbindung des Ventils mit dem fluidführenden Bauteil mit wenigen Bauteilen und geringem Bauraumbedarf zuverlässig überprüft werden kann.

Die Lösung der Aufgabe erfolgt erfindungsgemäß mit den Merkmalen des unabhängigen Anspruchs. Weitere praktische Ausführungsformen und Vorteile der Erfindung sind in Verbindung mit den abhängigen Ansprüchen beschrieben.

Eine erfindungsgemäße Brennkraftmaschine weist einen Abgasturbolader, eine Drosselklappe, einen Kraftstofftank, ein fluidführendes Bauteil und eine den Kraftstofftank und das fluidführende Bauteil strömungsleitend verbindende Tankentlüftungsleitung auf. In der Tankentlüftungsleitung ist ein Ventil angeordnet, welches insbesondere zur Regelung der Tankentlüftung dient. Ein Detektions-Teilbereich des Ventils ist dabei derart von dem fluidführenden Bauteil umgeben, dass um den Detektions-Teilbereich herum ein Detektionsraum gebildet ist. Stromabwärts des Abgasturboladers vor der Drosselklappe zweigt eine Druckleitung ab, welche in den Detektionsraum mündet, so dass Ansaugluft über die Druckleitung in den Detektionsraum gelangen kann, um den Detektionsraum mit Druck zu beaufschlagen, wobei mindestens ein Drucksensor zur Überwachung des Drucks im Detektionsraum vorgesehen ist.

In einer praktischen Ausführungsform zweigt ausgehend von einem sich zwischen dem Abgasturbolader und der Drosselklappe erstreckenden Druckrohr eine separate Druckleitung ab.

In einer weiteren praktischen Ausführungsform weist der Detektionsraum mindestens eine Eintrittsöffnung auf, welche durch mindestens eine Durchgangsöffnung in dem Ventil ausgebildet ist. Die Durchgangsöffnung erstreckt sich insbesondere von einem inneren Durchströmkanal in dem Ventil bis zu einer Außenseite des Ventils, so dass der Detektionsraum mittels der durch das Ventil strömenden Tankentlüftungsgase mit Druck beaufschlagt wird. Die mindestens eine Durchgangsöffnung ist dabei insbesondere stromaufwärts eines in dem Ventil angeordneten Verschlusselementes (wie beispielsweise einem Ventilteller) angeordnet, so dass auch bei geschlossenem Ventil eine Beaufschlagung des Detektionsraums mit Druck erfolgen kann. Die Ausbildung der Eintrittsöffnungen in dem Ventil stellt eine besonders platzsparende Lösung dar, da keine zusätzlichen Leitungen benötigt werden. Bei einer Ausbildung der Eintrittsöffnung durch eine Durchgangsöffnung sind vorzugsweise über den Umfang des Ventils verteilt mehrere Durchgangsöffnungen ausgebildet, die in den Detektionsraum münden. Die Summe der Querschnittsöffnungsflächen sämtlicher Eintrittsöffnungen bzw. Durchgangsöffnungen entspricht vorzugsweise dem Querschnitt einer kreisförmigen Öffnung mit einem Durchmesser von 5 mm bis 15 mm, mindestens 7 mm bis 13 mm, weiter bevorzugt 8 mm bis 12 mm und besonders bevorzugt 10 mm +/- 1 mm.

Abgesehen von der einen Eintrittsöffnung oder den mehreren Eintrittsöffnungen handelt es sich bei dem Detektionsraum vorzugsweise um einen abgeschlossenen Raum, d.h. einen Raum, der gegenüber anderen, ggf. über Spalte erreichbaren Räumen sowie gegenüber der ggf. über Spalte erreichbaren Umgebung abgeschlossen oder sogar geeignet abgedichtet ist, beispielsweise durch die geeignete Anordnung von Dichtelementen. Die Bildung eines Detektionsraums durch das umgebende fluidführende Bauteil kann insoweit mit besonders geringem Bauraumbedarf integral erfolgen, und zwar im einfachsten Fall nur durch entsprechende konstruktive Auslegung der einzelnen Elemente und optional durch die ergänzende Anordnung geeigneter Dichtelemente.

Das Ventil wird in der Praxis insbesondere zur Regelung einer Tankentlüftung verwendet, wobei bei geöffnetem Ventil Tankgase aus dem Kraftstofftank über die Tankentlüftungsleitung durch das Ventil in eine Ansaugstrecke strömen und entsprechend der Kraftstofftank entlüftet bzw. ein in der Tankentlüftungsleitung angeordneter Aktivkohlebehälter regeneriert wird. Bei geschlossenem Ventil wird ein Strömen von Tankentlüftungsgasen in die Ansaugstrecke verhindert. In der Praxis sind Ventile, die wie vorstehend beschrieben zur Tankentlüftung genutzt werden, häufig derart hervorragend positioniert, dass sie bei Reparatur- oder Wartungsarbeiten beschädigt werden können oder die Verbindung zwischen dem Ventil und dem fluidführenden Element zumindest teilweise gelöst wird. Darüber hinaus sind auch altersbedingte und materialermüdungsbedingte Schäden an dem Ventil oder dem fluidführenden Bauteil möglich.

Der Detektions-Teilbereich des Ventils erstreckt sich in Strömungsrichtung S betrachtet über die selbe Länge wie der Detektionsraum. Insbesondere erstreckt sich der Detektions-Teilbereich nur über einen Teil der Länge des Ventils oder auch über die gesamte Länge des Ventils.

Um Beschädigungen im Bereich des Detektions-Teilbereichs an dem Ventil und vor allem eine von einer Soll-Montagelage abweichende Ist-Montagelage des Ventils an dem fluidführenden Bauteil detektieren zu können (d.h. insbesondere eine zumindest teilweise gelöste Verbindung), ist um den Detektions-Teilbereich des Ventils der Detektionsraum gebildet. Bei dem Detektions-Teilbereich handelt es sich insbesondere um einen Verbindungsstutzen oder einen Abschnitt eines Verbindungsstutzens, welcher zur Verbindung mit dem fluidführenden Bauteil in eine in diesem ausgebildete korrespondierende Ausnehmung eingeführt wird und entsprechend von dem fluidführenden Bauteil umgeben ist. Insbesondere ist das Ventil mit dem fluidführenden Bauteil mittels Clips fest verbunden.

Wenn durch eine Beschädigung des Detektions-Teilbereichs und/oder ein zumindest teilweises Lösen der Verbindung zwischen dem Ventil und dem fluidführenden Bauteil der Detektionsraum zur Umgebung hin geöffnet wird, können die über die Eintrittsöffnung in den Detektionsraum gelangten Gase aus dem Detektionsraum entweichen, so dass es zu einem Druckverlust in dem Detektionsraum kommt, welcher von dem Drucksensor detektierbar ist. In diesem Fall kann ein Signal an den Fahrzeugführer und/oder eine Werkstatt ausgegeben werden, dass möglicherweise kraftstoffhaltige Tankgase in die Umgebung gelangen. Tritt eine Beschädigung oder Fehlfunktion in dem Detektions-Teilbereich oder ein Lösen der Verbindung derart auf, dass der Detektionsraum zur Umgebung hin nicht geöffnet wird, so gelangen keine kraftstoffhaltigen Tankentlüftungsgase von dem Detektionsraum in die Umgebung. Der Detektionsraum kann in diesem Fall als eine den Detektions-Teilbereich schützende Ummantelung angesehen werden.

Mit der erfindungsgemäßen Brennkraftmaschine können Beschädigungen im Detektions-Teilbereich des Ventils oder eine zumindest teilweise gelöste Verbindung zwischen dem Ventil und dem fluidführenden Bauteil zuverlässig detektiert werden, insbesondere auch solche, bei welchen kraftstoffhaltige Gase in die Umgebung gelangen können.

In einer praktischen Ausführungsform ist das fluidführende Bauteil eine Ansaughutze oder ein Verdichter eines Abgasturboladers. Die aus dem Ventil herausströmenden kraftstoffhaltigen Tankentlüftungsgase strömen in diesem Fall entweder über die Ansaughutze, welche in Fluidverbindung mit dem Abgasturbolader steht, unmittelbar in eine Ansaugstrecke stromaufwärts eines Abgasturboladers oder unmittelbar in den Verdichter. Die Ansaughutze oder der Verdichter des Abgasturboladers sind dann insbesondere derart ausgebildet, dass zumindest der Detektions-Teilbereich des Ventils derart umgeben ist, dass das jeweilige Bauteil (Ansaughutze oder Verdichter) zumindest teilweise einen Detektionsraum bildet.

In einer konstruktiv besonders einfachen Ausführungsform erstreckt sich die mindestens eine Durchgangsöffnung in Strömungsrichtung. Als Strömungsrichtung wird hierbei die Hauptströmungsrichtung der Tankentlüftungsgase durch das Ventil angesehen. Insbesondere erstreckt sich die mindestens eine Durchgangsöffnung in Entformungsrichtung des Ventils. Dies ist insbesondere bei Ventilen von Vorteil, welche mittels eines Urformverfahrens mit einer mindestens zweiteiligen Form hergestellt sind, insbesondere im Kunststoffspritzgussverfahren, denn solche Durchgangsöffnungen lassen sich einfach und damit kostengünstig ausbilden bzw. entformen.

Insbesondere sind in an den Detektionsraum angrenzenden Spalten Dichtelemente vorgesehen. Damit ist der Detektionsraum in einer Soll-Montagelage des Ventils an dem fluidführenden Bauteil gegenüber der Umgebung abgedichtet und kann über die Eintrittsöffnung mit Druck beaufschlagt werden. Als Dichtelemente dienen insbesondere an dem Detektions-Teilbereich des Ventils und/oder in dem den Detektions-Teilbereich umgebenden Bereich des fluidführenden Elements angeordnete Dichtringe, insbesondere O-Ringe. Vorzugsweise sind an dem Detektions-Teilbereich mindestens zwei voneinander beabstandete Dichtelemente vorgesehen und die mindestens eine Eintrittsöffnung mündet zwischen den beiden Dichtelementen in den Detektionsraum. Der abgedichtete Detektionsraum wird insofern bei der Herstellung der Verbindung zwischen dem Ventil und dem fluidführenden Bauteil gebildet.

In einer weiteren praktischen Ausführungsform ist mindestens eine Eintrittsöffnung, insbesondere zur Beaufschlagung des Detektionsraumes mit Druck, fluidal mit der Tankentlüftungsleitung verbunden. Vorzugsweise erfolgt die Einleitung von Tankentlüftungsgasen in den Detektionsraum über in die mindestens eine in dem Ventil ausgebildete Durchgangsöffnung. Insgesamt muss damit keine separate oder externe Quelle zur Beaufschlagung des Detektionsraumes mit Druck zur Verfügung gestellt werden, sondern es wird eine bereits vorhandene und insbesondere benachbarte Quelle verwendet.

In einer weiteren praktischen Ausführungsform ist eine Spülluftpumpe in der Tankentlüftungsleitung vorgesehen, die zur Beaufschlagung des Detektionsraums mit Druck dient. Die Spülluftpumpe dient in der Regel zur Förderung von Tankentlüftungsgasen aus Richtung des Kraftstofftanks in Richtung der Ansaugleitung. Die vorhandene Spülluftpumpe kann in dieser Ausführungsform dazu genutzt werden, den Detektionsraum mit Druck zu beaufschlagen, so dass auf weitere zusätzliche Druckquellen verzichtet werden kann. Üblicherweise wird eine Spülluftpumpe bereits zur Überprüfung einer Beschädigung der Tankentlüftungsleitung eingesetzt und in dieser Ausführungsform dann auch vorteilhafterweise zur Überprüfung der Verbindung zwischen dem Ventil und dem fluidführenden Bauteil.

Alternativ oder in Ergänzung dazu ist der Drucksensor in der Tankentlüftungsleitung und/oder der Drucksensor in dem Druckrohr angeordnet. Insbesondere wird dabei ein bereits in der Tankentlüftungsleitung vorhandener Drucksensor, welcher zur Detektion des Drucks in der Tankentlüftungsleitung dient, ebenfalls zur Überwachung der Verbindung zwischen dem fluidführenden Bauteil und dem Ventil verwendet, wodurch Bauraum und Kosten gespart werden können.

Ferner wird als Alternative oder zusätzlich zu einer in dem Ventil ausgebildeten Durchgangsöffnung darauf hingewiesen, dass auch eine separate Druckleitung vorgesehen sein kann, welche zur Beaufschlagung des Detektionsraumes mit Druck dient. Insbesondere ist eine solche Druckleitung fluidal mit einem Druckrohr stromabwärts eines Verdichters verbunden und der Drucksensor ist in dem Druckrohr angeordnet.

Die Erfindung wurde vor allem in Verbindung mit fluidführenden Bauteilen und/oder Ventilen in fluidführenden Bauteilen gemacht, die vollständig oder teilweise aus Kunststoff hergestellt sind. Denn gerade Bauteile aus Kunststoff können materialbedingt nach einer längeren Nutzungsdauer verspröden und dann plötzlich versagen. Ein derartiges Versagen kann mit der erfindungsgemäßen Brennkraftmaschine zuverlässig detektiert werden.

Es wird auch auf ein Verfahren zur Überwachung einer Verbindung zwischen einem Ventil in einer Tankentlüftungsleitung und einem fluidführenden Bauteil verwiesen, wobei ein Detektions-Teilbereich des Ventils derart von dem fluidführenden Bauteil umgeben ist, dass um den Detektions-Teilbereich herum ein Detektionsraum gebildet ist und wobei der Detektionsraum mindestens eine Eintrittsöffnung aufweist. Das Verfahren umfasst folgende Verfahrensschritte:
a) Absperren des Ventils,
b) Aufbauen eines Prüfdrucks in der Tankentlüftungsleitung mittels einer in der Tankentlüftungsleitung angeordneten Spülluftpumpe,
c) Erfassen des Ist-Prüfdrucks in der Tankentlüftungsleitung mittels eines Drucksensors, und
d) Vergleichen des aufgebauten Ist-Prüfdrucks mit einem Soll-Prüfdruck.

Zur Überprüfung der Verbindung zwischen dem Ventil und dem fluidführenden Bauteil wird mittels der Spülluftpumpe und geschlossenem Ventil ein Prüfdruck in der Tankentlüftungsleitung aufgebaut. Bei dem Prüfdruck handelt es sich insbesondere um einen Überdruck in Bezug auf den Umgebungsdruck. Im Falle eines intakten Ventils bzw. einer ordnungsgemäßen Verbindung des Ventils und dem fluidführenden Bauteil ist der Detektionsraum gegenüber der Umgebung abgedichtet und wird lediglich über die mindestens eine Eintrittsöffnung mit Druck beaufschlagt. Es können keine Tankentlüftungsgase über den Detektionsraum entweichen und der Ist-Prüfdruck in dem Detektionsraum entspricht - sofern keine weiteren Beschädigungen an der Tankentlüftungsleitung vorliegen - dem Soll-Prüfdruck. Im Falle einer Beschädigung des Ventils und des fluidführenden Bauteils im Bereich des Detektions-Teilbereichs oder einer gelösten Verbindung zwischen dem Ventil und dem fluidführenden Bauteil, wobei der Detektionsraum gegenüber der Umgebung geöffnet ist, entweichen trotz geschlossenen Ventils Tankentlüftungsgase über die Eintrittsöffnung und den Detektionsraum in die Umgebung, so dass sich ein Ist-Prüfdruck einstellt, der geringer ist als der Soll-Prüfdruck. Dies kann mit dem Drucksensor detektiert werden. Bei Detektion eines solchen niedrigen Ist-Prüfdrucks wird vorzugsweise ein Signal an den Fahrzeugführer und/oder eine Werkstatt ausgegeben, dass gegebenenfalls kraftstoffhaltige Gase in die Umgebung gelangen. Insgesamt wird bei dem beschriebenen Verfahren eine bereits vorhandene Infrastruktur aus Spülluftpumpe und Ventil verwendet, um die Verbindung zwischen dem Ventil und dem fluidführenden Bauteil zu überprüfen.

Insbesondere werden die vorstehend genannten Verfahrensschritte unmittelbar nach, vor oder während des Starts einer Brennkraftmaschine durchgeführt. Damit wird eine regelmäßige Überprüfung der Verbindung zwischen dem Ventil und dem fluidführenden Bauteil realisiert. Vorzugsweise wird die Überprüfung während oder nach dem Start durchgeführt, um die etwaig durch die Spülluftpumpe entstehenden Geräusche durch weitere Geräusche der Brennkraftmaschine zu überdecken. Alternativ oder in Ergänzung dazu werden die vorstehend genannten Verfahrensschritte unmittelbar vor oder nach Betriebsphasen der Brennkraftmaschine, in welchen eine Tankentlüftung erfolgt, durchgeführt. In diesem Fall ist die Spülluftpumpe bereits in Betrieb und es werden lediglich maximal einige Sekunden benötigt, um bei geschlossenem Ventil einen Druck in der Tankentlüftungsleitung und in dem Detektionsraum, aufzubauen. so dass eine Überprüfung der Verbindung zwischen dem Ventil und dem fluidführenden Bauteil besonders zügig erfolgen kann.

Weitere praktische Ausführungsformen der Erfindung sind nachfolgend im Zusammenhang mit den Zeichnungen beschrieben. Es zeigen:
- Fig. 1: eine erste Ausführungsform einer Brennkraftmaschine in einer schematischen Darstellung,
- Fig. 2: den mit II gekennzeichneten Bereich aus Fig. 1 mit einem Ventil und einer Ansaughutze in einer perspektivischen Darstellung,
- Fig. 3: den mit III gekennzeichneten Bereich aus Fig. 2 in einer Seitenansicht mit geschnittener Ansaughutze,
- Fig. 4: den in Fig. 3 gezeigten Bereich III aus Fig. 2 in einer perspektivischen Ansicht,
- Fig. 5: das Ventil in einer Vorderansicht,
- Fig. 6: den mit III gekennzeichneten Bereich aus Fig. 2 in einer schematischen Schnittdarstellung,
- Fig. 7: eine Ausführungsform einer erfindungsgemäßen Brennkraftmaschine in einer schematischen Darstellung und
- Fig. 8: den mit VIII gekennzeichneten Bereich aus Fig. 7 mit einem Ventil, einer Ansaughutze und einem Druckrohr in einer perspektivischen Darstellung.

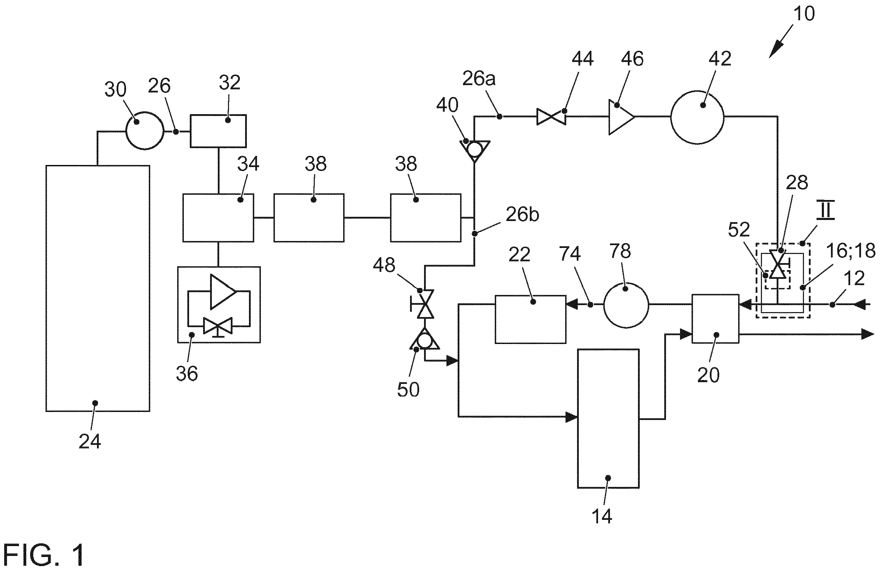

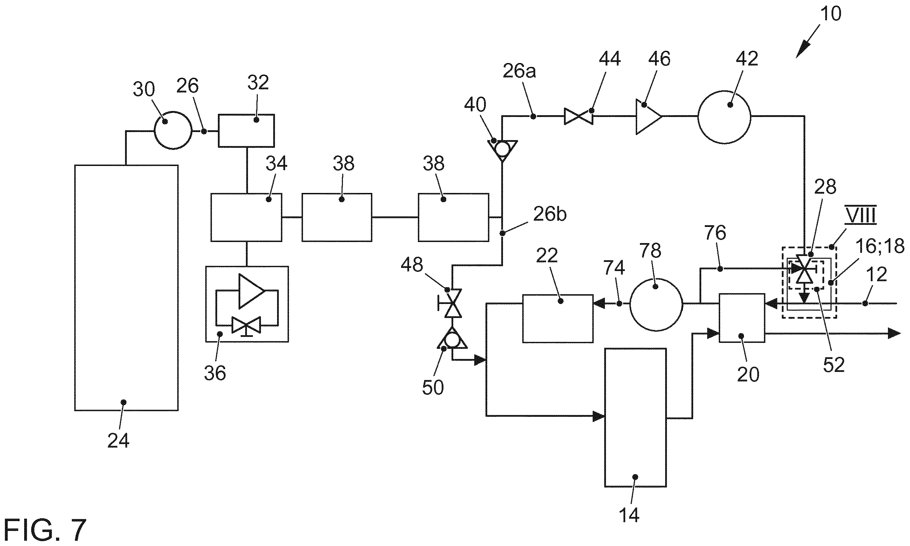

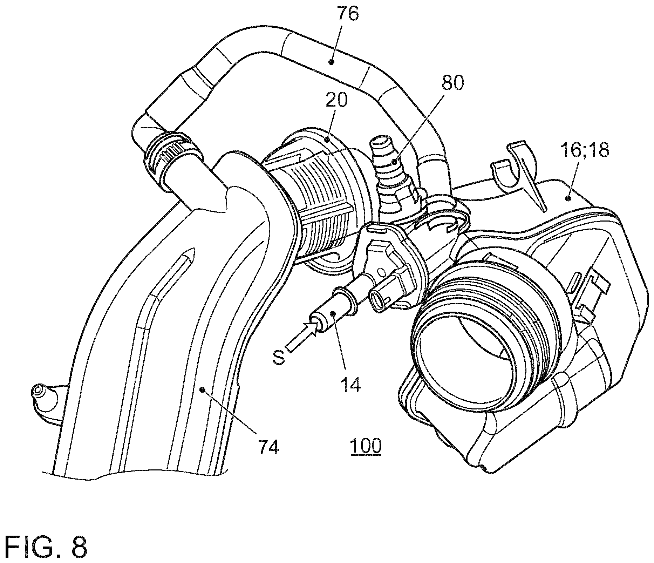

Fig. 1 zeigt eine Brennkraftmaschine 10 in einer schematischen Darstellung, wobei im Folgenden nur diejenigen Elemente im Detail erläutert werden, welche in Verbindung mit der nachfolgend anhand der Figuren 7 und 8 erläuterten Erfindung potentiell relevant sind.

In der Brennkraftmaschine 10 ist eine Ansaugleitung 12 vorgesehen, über welche Frischluft aus der Atmosphäre in Richtung eines Brennraums 14 gefördert werden kann. Als ein fluidführendes Bauteil 16 ist in der Ansaugstrecke 12 eine Ansaughutze 18 vorgesehen. Stromabwärts der Ansaughutze 18 folgen ein Verdichter eines Abgasturboladers 20 sowie eine Drosselklappe 22.

Aus dem Brennraum 14 geführtes Abgas strömt über den Abgasturbolader 20 in Richtung einer Abgasanlage (nicht dargestellt).

Die Brennkraftmaschine 10 umfasst auch einen Kraftstofftank 24, welcher über eine Tankentlüftungsleitung 26 entlüftet wird. Ein erster Abzweig 26a der Tankentlüftungsleitung 26 führt zu einem Ventil 28. Ein zweiter Abzweig 26b der Tankentlüftungsleitung 26 führt in den Bereich stromabwärts der Drosselklappe 22.

In dem Pfad 26a der Tankentlüftungsleitung 26 sind ferner ein Druck- und Temperatursensor 30, ein Kraftstofftankisolierventil (FTIV) 32, ein Aktivkohlebehälter 34, ein Diagnosemodul Tankleckage (DMTL) 36, zwei Pulsationsdämpfer 38, ein Rückschlagventil 40, ein Schaltventil 44, ein weiterer Drucksensor 42 und das Ventil 28 angeordnet. Ferner ist in dem Pfad 26a eine Spülluftpumpe 46 angeordnet. Optional kann in dem Pfad 26a auch ein Temperatursensor angeordnet sein (nicht dargestellt).

In dem Pfad 26b sind ein Ventil 48 und ein Rückschlagventil 50 angeordnet.

Wie in Fig. 1 auch bereits schematisch dargestellt ist und im Folgenden anhand der weiteren Figuren noch im Detail erläutert wird, ist das Ventil 28 zumindest teilweise von einem - in Fig. 1 nur als gestrichelter Kasten dargestellten - Detektionsraum 52 umgeben.

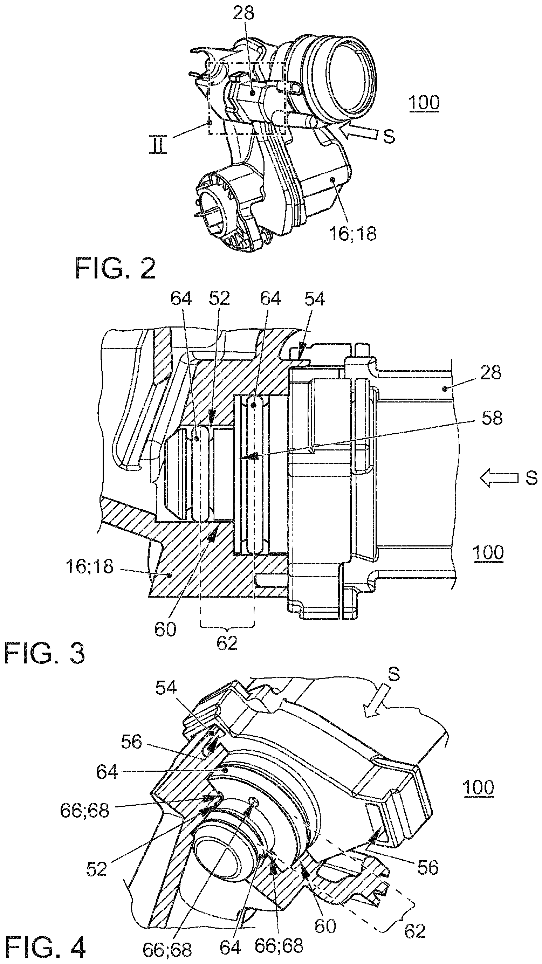

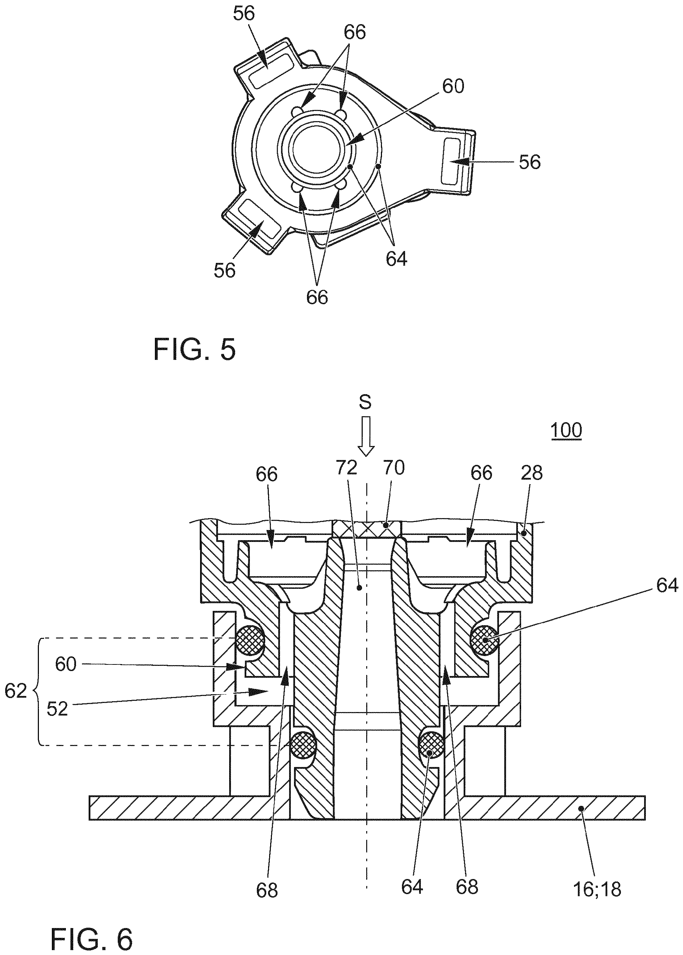

In den Fig. 2 bis 4 und in Fig. 6 ist das fluidführende Bauteil 16 in Form der Ansaughutze 18 mit dem daran angeordneten Ventil 28 dargestellt. Durch das Ventil 28 strömen Tankentlüftungsgase in Strömungsrichtung S. Das Ventil 28 ist fest mit der Ansaughutze 18 mittels einer Clipverbindung mit drei Clips 54 (in den Fig. 3 und 4 ist nur ein Clip 54 erkennbar) und korrespondierenden Clip-Öffnungen 56 fest miteinander verbunden. Die Ansaughutze 18 und das Ventil 28 sind vorliegend aus Kunststoff. Wie in Fig. 3 gut erkennbar ist, weist die Ansaughutze 18 eine Ausnehmung 58 auf, in welche ein Verbindungsstutzen 60 des Ventils 28 eingeführt ist.

Vorliegend ist in dem Verbindungsstutzen 60 einen Detektions-Teilbereich 62 des Ventils 28 vorgesehen, welcher von der Ansaughutze 18 derart umgeben ist, dass der Detektionsraum 52 um diesen Detektions-Teilbereich 62 zwischen dem Ventil 28 und der Ansaughutze 18 gebildet ist.

An dem Verbindungsstutzen 60 sind zwei Dichtelemente 64 in Form von O-Ringen angeordnet, welche den Detektionsraum 52 begrenzen und dichtend verschließen. Der Detektionsraum 52 erstreckt sich folglich in dem Spalt zwischen dem Ventil 28 und der Ansaughutze 18. Zur Beaufschlagung des Detektionsraumes 52 mit Druck sind in dem Ventil 28 vier über den Umfang des Ventils 28 verteilt angeordnete Durchgangsöffnungen 66 ausgebildet (vgl. Fig. 5 und Fig. 6), welche in den Detektionsraum 52 münden und insofern als Eintrittsöffnungen 68 in den Detektionsraum 52 dienen. Die Durchgangsöffnungen 66 erstrecken sich vorliegend in Hauptströmungsrichtung S, welche auch der Entformungsrichtung des aus Kunststoff hergestellten Ventils 28 entspricht.

In Fig. 6 ist gut zu erkennen, dass sich die Durchgangsöffnungen 66 stromaufwärts eines Verschlusselementes 70, hier eines Ventiltellers, des Ventils 28 erstrecken. Die Durchgangsöffnungen 66 erstrecken sich vorliegend von einem inneren Durchströmkanal 72 zur Außenseite des Ventils 28 und münden in den Detektionsraum 52 zwischen den beiden Dichtelementen 64. In dieser ersten Ausführungsform sind die Eintrittsöffnungen 68 in den Detektionsraum 52 fluidal mit der Tankentlüftungsleitung 26 und dabei mit dem Pfad 26a verbunden.

Im Folgenden wird erläutert, wie die Verbindung zwischen dem Ventil 28 und dem fluidführenden Bauteil 16 überprüft werden kann.

Bei ordnungsgemäßer Verbindung zwischen dem Ventil 28 und dem fluidführenden Bauteil 16 bzw. der Ansaughutze 18 in einer Soll-Montagelage (vgl. Fig. 3 und 6), ist der Detektionsraum 52 mittels der an dem Detektions-Teilbereich 62 angeordneten Dichtelemente 64 gegenüber der Umgebung 100 abgedichtet. Der Detektionsraum 52 wird über die Eintrittsöffnungen 68, welche in dem Ventil 28 ausgebildet sind, mit Druck aus der Tankentlüftungsleitung 26 beaufschlagt.

Zur Überprüfung der Verbindung wird das Ventil 28 geschlossen, indem das Verschlusselement 70 den Durchströmkanal 72 versperrt, und mittels der Spülluftpumpe 46 in der Tankentlüftungsleitung 26 wird ein Prüfdruck aufgebaut. Dieser Prüfdruck herrscht im Falle des abgedichteten Detektionsraumes 52 ebenfalls im Detektionsraum 52. Mittels des in der Tankentlüftungsleitung 26 angeordneten Drucksensors 42 wird der Druck in der Tankentlüftungsleitung 26 gemessen und überprüft, ob der gemessene Ist-Prüfdruck einem Soll-Prüfdruck entspricht.

Ist die Verbindung zwischen dem Ventil 28 und der Ansaughutze 18 derart gelöst, dass der Detektionsraum 52 gegenüber der Umgebung 100 geöffnet ist, kommt es zu einem Druckabfall in der Tankentlüftungsleitung 26, und der Ist-Prüfdruck ist geringer als der Soll-Prüfdruck.

In Verbindung mit den Fig. 7 und Fig. 8 wird im Folgenden eine Ausführungsform einer erfindungsgemäßen Brennkraftmaschine 10 erläutert. Für identische oder zumindest funktionsgleiche Elemente werden dabei die gleichen Bezugszeichen verwendet wie bei der vorstehenden Beschreibung der ersten Ausführungsform.

Zur Beschreibung der zweiten Ausführungsform wird im Folgenden nur auf die wesentlichen Unterschiede eingegangen.

Wie in Fig. 7 und Fig. 8 dargestellt ist, zweigt stromabwärts des Abgasturboladers 20 ausgehend von einem sich zwischen dem Abgasturbolader 20 und der Drosselklappe 22 erstreckenden Druckrohr 74 eine separate Druckleitung 76 ab, welche in den Detektionsraum 52 mündet. Zur Messung des Drucks ist in dem Druckrohr 74 ein Drucksensor 78 vorgesehen. In Fig. 8 ist ein Anschluss 80 für die separate Druckleitung 74 dargestellt, wobei die Druckleitung 74 vorliegend nicht mit den Anschluss 80 verbunden ist. Der Anschluss 80 mündet in den Detektionsraum 52, so dass Ansaugluft aus dem Druckrohr 74 in den Detektionsraum 52 gelangen kann, zur Beaufschlagung des Detektionsraums 52 mit Druck.

### Bezugszeichenliste

- 10: Brennkraftmaschine
- 12: Ansaugleitung
- 14: Brennraum
- 16: fluidführendes Bauteil
- 18: Ansaughutze
- 20: Abgasturbolader
- 22: Drosselklappe
- 24: Kraftstofftank
- 26: Tankentlüftungsleitung
- 26a: erster Pfad
- 26b: zweiter Pfad
- 28: Ventil
- 30: Druck- und Temperatursensor
- 32: Kraftstofftankisolierventil
- 34: Aktivkohlebehälter
- 36: Diagnosemodul Tankleckage
- 38: Pulsationsdämpfer
- 40: Rückschlagventil
- 42: Drucksensor
- 44: Steuerventil
- 46: Spülluftpumpe
- 48: Ventil
- 50: Rückschlagventil
- 52: Detektionsraum
- 54: Clip
- 56: Clip-Öffnung
- 58: Ausnehmung
- 60: Verbindungsstutzen
- 62: Detektions-Teilbereich
- 64: Dichtelement
- 66: Durchgangsöffnung
- 68: Eintrittsöffnung
- 70: Verschlusselement
- 72: Durchströmkanal
- 74: Druckrohr
- 76: Druckleitung
- 78: Drucksensor
- 80: Anschluss
- 100: Umgebung

## Patentansprüche

1. Brennkraftmaschine mit einem Abgasturbolader (20), einer Drosselklappe (22), einem Kraftstofftank (24), einem fluidführenden Bauteil (16) und einer den Kraftstofftank (24) und das fluidführende Bauteil (16) strömungsleitend verbindenden Tankentlüftungsleitung (26), wobei in der Tankentlüftungsleitung (26) ein Ventil (28) angeordnet ist, wobei, zur Überprüfung einer Verbindung zwischen dem Ventil (28) und dem fluidführenden Bauteil (16), Detektions-Teilbereich (62) des Ventils (28) derart von dem fluidführenden Bauteil (16) umgeben ist, dass um den Detektions-Teilbereich (62) herum ein Detektionsraum (52) gebildet ist, **dadurch gekennzeichnet, dass** stromabwärts des Abgasturboladers (20) vor der Drosselklappe (22) eine Druckleitung (76) abzweigt, welche in den Detektionsraum (52) mündet, so dass Ansaugluft über die Druckleitung (76) in den Detektionsraum (52) gelangen kann, um den Detektionsraum (52) mit Druck zu beaufschlagen, wobei mindestens ein Drucksensor (42, 78) zur Überwachung des Drucks im Detektionsraum (52) vorgesehen ist.

2. Brennkraftmaschine nach dem vorstehenden Anspruch, **dadurch gekennzeichnet, dass** ausgehend von einem sich zwischen dem Abgasturbolader (20) und der Drosselklappe (22) erstreckenden Druckrohr (74) eine separate Druckleitung (76) abzweigt.

3. Brennkraftmaschine nach einem der vorstehenden Ansprüche, **dadurch gekennzeichnet, dass** das fluidführende Bauteil (16) eine Ansaughutze (18) oder ein Verdichter des Abgasturboladers (20) ist.

4. Brennkraftmaschine nach einem der vorstehenden Ansprüche, **dadurch gekennzeichnet, dass** der Detektionsraum (52) mindestens eine Eintrittsöffnung (68) aufweist, welche durch mindestens eine Durchgangsöffnung (66) in dem Ventil (28) ausgebildet ist.

5. Brennkraftmaschine nach dem vorstehenden Anspruch, **dadurch gekennzeichnet, dass** sich die mindestens eine Durchgangsöffnung (66) in Strömungsrichtung (S) erstreckt.

6. Brennkraftmaschine nach einem der vorstehenden Ansprüche, **dadurch gekennzeichnet, dass** in an den Detektionsraum (52) angrenzenden Spalten Dichtelemente (64) vorgesehen sind.

7. Brennkraftmaschine nach einem der vorstehenden Ansprüche, **dadurch gekennzeichnet, dass** mindestens eine Eintrittsöffnung (68) vorgesehen ist, die fluidal mit der Tankentlüftungsleitung (26) verbunden ist.

8. Brennkraftmaschine nach einem der vorstehenden Ansprüche, **dadurch gekennzeichnet, dass** eine Spülluftpumpe (46) in der Tankentlüftungsleitung (26) vorgesehen ist und/oder dass der Drucksensor (42) in der Tankentlüftungsleitung (26) und/oder dass der Drucksensor (78) in dem Druckrohr (74) angeordnet ist.

9. Brennkraftmaschine nach einem der vorstehenden Ansprüche, **dadurch gekennzeichnet, dass** das Ventil (28) aus Kunststoff hergestellt ist.

## Claims

1. Internal combustion engine having an exhaust-gas turbocharger (20), a throttle flap (22), a fuel tank (24), a fluid-conducting component (16) and a tank ventilation line (26) which connects the fuel tank (24) and the fluid-conducting component (16) in flow-guiding fashion, wherein a valve (28) is arranged in the tank ventilation line (26), wherein, for the checking of a connection between the valve (28) and the fluid-conducting component (16),
a detection subregion (62) of the valve (28) is surrounded by the fluid-conducting component (16) such that a detection space (52) is formed around the detection subregion (62),
**characterized in that** a pressure line (76) branches off downstream of the exhaust-gas turbocharger (20) and upstream of the throttle flap (22), which pressure line opens into the detection space (52) such that intake air can pass via the pressure line (76) into the detection space (52) in order to charge the detection space (52) with pressure, wherein at least one pressure sensor (42, 78) is provided for monitoring the pressure in the detection space (52).

2. Internal combustion engine according to the preceding claim, **characterized in that** a separate pressure line (76) branches off from a pressure pipe (74) which extends between the exhaust-gas turbocharger (20) and the throttle flap (22).

3. Internal combustion engine according to any of the preceding claims, **characterized in that** the fluid-conducting component (16) is an intake scoop (18) or a compressor of the exhaust-gas turbocharger (20) .

4. Internal combustion engine according to any of the preceding claims, **characterized in that** the detection space (52) has at least one inlet opening (68) which is formed by at least one passage opening (66) in the valve (28).

5. Internal combustion engine according to the preceding claim, **characterized in that** the at least one passage opening (66) extends in a flow direction (S) .

6. Internal combustion engine according to any of the preceding claims, **characterized in that** sealing elements (64) are provided in gaps which adjoin the detection space (52).

7. Internal combustion engine according to any of the preceding claims, **characterized in that** at least one inlet opening (68) is provided which is fluidically connected to the tank ventilation line (26).

8. Internal combustion engine according to any of the preceding claims, **characterized in that** a scavenging air pump (46) is provided in the tank ventilation line (26) and/or **in that** the pressure sensor (42) is arranged in the tank ventilation line (26) and/or in that the pressure sensor (78) is arranged in the pressure pipe (74).

9. Internal combustion engine according to any of the preceding claims, **characterized in that** the valve (28) is produced from plastics.

## Revendications

1. Moteur à combustion interne comprenant un turbocompresseur à gaz d'échappement (20), un clapet d'étranglement (22), un réservoir de carburant (24), un composant de transport de fluide (16) et une conduite de ventilation de réservoir (26) reliant fluidiquement le réservoir de carburant (24) et le composant de transport de fluide (16), une soupape (28) étant disposée dans la conduite de ventilation de réservoir (26),
pour vérifier une liaison entre la soupape (28) et le composant de transport de fluide (16)
une sous-zone de détection (62) de la soupape (28) étant entourée par le composant de transport de fluide (16) de façon à ménager une chambre de détection (52) autour de la sous-zone de détection (62),
**caractérisé en ce qu'**une conduite sous pression (76) est dérivée en aval du turbocompresseur à gaz d'échappement (20) et en amont du clapet d'étranglement (22) et débouche dans la chambre de détection (52) de sorte que l'air d'admission puisse atteindre la chambre de détection (52) par le biais de la conduite sous pression (76) afin de soumettre la chambre de détection (52) à une pression, au moins un capteur de pression (42, 78) étant prévu pour surveiller la pression dans la chambre de détection (52).

2. Moteur à combustion interne selon la revendication précédente, **caractérisé en ce qu'**une conduite sous pression séparée (76) est dérivée d'une conduite sous pression (74) qui s'étend entre le turbocompresseur à gaz d'échappement (20) et le clapet d'étranglement (22) .

3. Moteur à combustion interne selon l'une des revendications précédentes, **caractérisé en ce que** le composant de transport de fluide (16) est un capot de ventilation (18) ou un compresseur du turbocompresseur à gaz d'échappement (20).

4. Moteur à combustion interne selon l'une des revendications précédentes, **caractérisé en ce que** la chambre de détection (52) comporte au moins une ouverture d'entrée (68) qui est formée par au moins une ouverture traversante (66) ménagée dans la soupape (28) .

5. Moteur à combustion interne selon la revendication précédente, **caractérisé en ce que** l'au moins une ouverture traversante (66) s'étend dans le sens d'écoulement (S).

6. Moteur à combustion interne selon l'une des revendications précédentes, **caractérisé en ce que** des éléments d'étanchéité (64) sont prévus dans des colonnes adjacentes à la chambre de détection (52).

7. Moteur à combustion interne selon l'une des revendications précédentes, **caractérisé en ce qu'**au moins une ouverture d'entrée (68) est prévue qui est reliée fluidiquement à la conduite de ventilation de réservoir (26).

8. Moteur à combustion interne selon l'une des revendications précédentes, **caractérisé en ce qu'**une pompe à air de balayage (46) est prévue dans la conduite de ventilation de réservoir (26) et/ou **en ce que** le capteur de pression (42) est disposé dans la conduite de ventilation de réservoir (26) et/ou **en ce que** le capteur de pression (78) est disposé dans la conduite sous pression (74).

9. Moteur à combustion interne selon l'une des revendications précédentes, **caractérisé en ce que** la soupape (28) est en matière synthétique.
